(19) Europäisches Patentamt
European Patent Office
Office européen des brevets

(11) **EP 3 796 052 B1**

(12) **EUROPÄISCHE PATENTSCHRIFT**

(45) Veröffentlichungstag und Bekanntmachung des Hinweises auf die Patenterteilung:
**30.03.2022  Patentblatt 2022/13**

(21) Anmeldenummer: **20185459.3**

(22) Anmeldetag: **13.07.2020**

(51) Internationale Patentklassifikation (IPC):
***G01V 8/12*** (2006.01)     ***G01V 8/10*** (2006.01)

(52) Gemeinsame Patentklassifikation (CPC):
**G01V 8/12**

(54) **OPTOELEKTRONISCHE SENSORANORDNUNG UND SENSORSYSTEM**

OPTOELECTRONIC SENSOR ASSEMBLY AND SENSOR SYSTEM

AGENCEMENT DE CAPTEUR OPTOÉLECTRONIQUE ET SYSTÈME DE CAPTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.09.2019  DE 102019125321**

(43) Veröffentlichungstag der Anmeldung:
**24.03.2021  Patentblatt 2021/12**

(73) Patentinhaber: **SICK AG**
**79183 Waldkirch (DE)**

(72) Erfinder:
• **MERETTIG, Gerhard**
**79350 Sexau (DE)**
• **WASLOWSKI, Kai**
**79312 Emmendingen (DE)**

(74) Vertreter: **Manitz Finsterwald**
**Patent- und Rechtsanwaltspartnerschaft mbB**
**Martin-Greif-Strasse 1**
**80336 München (DE)**

(56) Entgegenhaltungen:
DE-A1- 4 141 469     DE-A1- 10 136 242
DE-A1-102005 018 263     DE-A1-102005 045 578

**Beschreibung**

Die vorliegende Erfindung betrifft eine optoelektronische Sensoranordnung zum Erfassen von in einem Überwachungsbereich vorhandenen Objekten, mit einem Lichtsender zum Aussenden von Lichtsignalen, mit einem Lichtempfänger zum Erfassen von Empfangslichtsignalen und zum Umwandeln der Empfangslichtsignale in elektrische Empfangssignale und mit einer mit dem Lichtsender und dem Lichtempfänger verbundenen Steuereinheit zum Erzeugen eines Objekterfassungssignals, falls ein in dem Überwachungsbereich vorhandenes Objekt erfasst wurde, wobei die Steuereinheit dazu eingerichtet ist, den Lichtsender zyklisch in vorbestimmten Zeitabständen für eine vorbestimmte Sendezeitdauer zum Aussenden eines jeweiligen Lichtsignals anzusteuern, den Lichtempfänger zumindest für die Dauer eines Erfassungszeitfensters, welches die Sendezeitdauer umfasst, zu aktivieren, wobei das Objekterfassungssignal auf der Grundlage der während des Erfassungszeitfensters erfassten Empfangslichtsignale erzeugt wird.

Derartige Sensoranordnungen können in unterschiedlicher Weise ausgestaltet sein, beispielsweise als Lichttaster oder als Lichtschranke, insbesondere Einweglichtschranke oder Reflexionslichtschranke. Bei einem Lichttaster werden die ausgesendeten Lichtsignale von einem gegebenenfalls im Überwachungsbereich vorhandenen Objekt reflektiert und als Empfangslichtsignale von dem Lichtempfänger detektiert, so dass aufgrund dieser Empfangslichtsignale das Vorhandensein eines Objekts in dem Überwachungsbereich erkannt werden kann. Bei einer Lichtschranke werden die ausgesendeten Lichtsignale bei Abwesenheit eines Objekts im Überwachungsbereich von dem Lichtempfänger entweder direkt oder über einen Reflektor empfangen, wobei eine Erkennung eines im Überwachungsbereich vorhandenen Objekts dadurch erfolgt, dass eine durch das Objekt bewirkte vollständige oder teilweise Unterbrechung des Lichtwegs detektiert wird, d.h. dass ein ausgesendetes Lichtsignal gar nicht oder zumindest nur in abgeschwächter Form empfangen wird und daraufhin ein Objekterfassungssignal erzeugt wird. Auch eine Ausgestaltung der Sensoranordnung als Lichtgitter ist von der vorliegenden Erfindung erfasst.

Bei derartigen Sensoranordnungen erfolgt die Aussendung der Lichtsignale in der Regel in Form von kurzen Lichtpulsen oder Pulsfolgen, welche innerhalb eines jeweiligen Zyklus für die genannte Sendezeitdauer durch den Lichtsender ausgesendet werden. Die Sendezeitdauer kann beispielsweise 4 $\mu$s betragen.

Die Aussendung der Lichtsignale wird in vorbestimmten Zeitabständen wiederholt. Ein jeweiliger Zeitabstand der Aussendung der Lichtsignale, der auch als Zyklusdauer oder Rahmenintervall bezeichnet werden kann, kann beispielsweise 100 $\mu$s betragen.

Der Zeitraum, in dem der Lichtempfänger jeweils aktiviert ist, um im Wesentlichen diejenigen Empfangslichtsignale zu erfassen, die auf einen direkten oder indirekten Empfang von Sendelicht zurückzuführen sind, wird hier als Erfassungszeitfenster bezeichnet. Das Erfassungszeitfenster umfasst die Sendezeitdauer, d.h. den Zeitraum, in dem eine Aussendung von Lichtsignalen erfolgt, wobei die Länge des Erfassungszeitfensters in der Regel etwas größer ist als die Sendezeitdauer, d.h. ein Erfassungszeitfenster beginnt in der Regel kurz vor der Aussendung eines Lichtsignals und endet kurz nach dem Ende der Aussendung dieses Lichtsignals.

Bei Sensoranordnungen besteht grundsätzlich das Problem, dass der Lichtempfänger nicht nur Empfangssignale von dem zugeordneten Lichtsender empfängt, sondern unter Umständen auch sogenannte Störlichtsignale, die von externen Lichtquellen erzeugt werden können und ungewollt von dem betreffenden Lichtempfänger erfasst werden. Typische Quellen für Störlichtsignale können Lichtquellen sein, welche insbesondere gepulstes oder moduliertes Licht emittieren, beispielsweise Energiesparlampen, LED-Lampen oder Bildschirme. Besonders kritisch können insbesondere solche Störlichtsignale sein, welche von einer weiteren, insbesondere baugleichen Sensoranordnung stammen, welche in der näheren Umgebung betrieben wird. Oftmals lässt es sich nicht ausschließen, dass trotz geeigneter Abschirmungsmaßnahmen der Lichtempfänger einer bestimmten Sensoranordnung Lichtsignale empfängt, die von einem Lichtsender einer benachbarten Sensoranordnung ausgesendet wurden. Während ein direkter Empfang unter Umständen durch geeignete Ausrichtung der Komponenten oder Abschirmungsmaßnahmen vermieden werden kann, können bewegliche Objekte, welche die ausgesendeten Lichtsignale in unvorhersehbare Richtungen reflektieren oder ablenken, zu Störungen führen.

Die Störungen können insbesondere dann kritisch werden, wenn zwei benachbarte baugleiche Sensoranordnungen mit denselben oder sehr ähnlichen Zyklusdauern betrieben werden. In Abhängigkeit von der jeweiligen Ausgestaltung der Sensoranordnung können derartige Störlichtsignale zu falsch-positiven oder im kritischeren Fall auch zu falsch-negativen Objekterfassungssignalen führen. Hierdurch kann sowohl die Verfügbarkeit als auch die Sicherheit einer durch die Sensoranordnung überwachten Maschine beeinträchtigt werden.

Bei einer in DE 41 41 469 A1 beschriebenen optischen Sensoranordnung wird vor und/oder nach Aussendung des Lichtsignals ein eventuell vorhandenes Störsignal vom Lichtempfänger erfasst und die dadurch gewonnene Information zur annähernden Bestimmung des Störsignalverlaufs während der Lichtsignalaussendung und zur Extraktion des Nutzsignals aus dem empfangenen, sich aus Nutz- und Störsignal zusammensetzenden Gesamtlichtsignal herangezogen. Die Information über das Störsignal kann dazu herangezogen werden, die Aussendung des nächsten Lichtsignals zeitlich soweit zu verschieben, dass bei Aussendung des nächsten Lichtsignals das Störsignal zumindest mit einer bestimmten Wahrscheinlichkeit bis unter einen vorgegebenen Schwellwert abgesunken ist.

Eine schwellwertbasierte Störsignaldetektion birgt jedoch das Problem, dass eine geeignete Wahl des Schwellwerts sehr kritisch ist, da bei zu hoch gewähltem Schwellwert verrauschte Lichtsignale oder Lichtsignale mit geringer Intensität nicht zuverlässig genug detektiert werden können und bei zu niedrig gewähltem Schwellwert auch kleine Störlichtsignale zu einer falsch-positiven Objekterfassung führen können.

DE 10 2005 045 578 A1 offenbart ein Lichtgitter mit parallelen Lichtausbreitungspfaden, bei welchem in ähnlicher Weise zeitlich vor oder nach der eigentlichen Lichteinstrahlperiode zusätzlich eine Lichtempfangsabtastung durchgeführt wird, bei der nur die Lichtempfangselemente aktiviert sind und kein Sendelicht ausgestrahlt wird, wobei ebenfalls eine schwellwertbasierte Störsignaldetektion erfolgt.

Weitere optoelektronische Sensoranordnungen sind in DE 101 36 242 A1 und DE 10 2005 018 263 A1 beschrieben.

Es ist die Aufgabe der vorliegenden Erfindung, eine optoelektronische Sensoranordnung anzugeben, welche eine verbesserte Störsignalfestigkeit aufweist.

Die Lösung der Aufgabe erfolgt durch eine optoelektronische Sensoranordnung mit den Merkmalen des Anspruchs 1. Erfindungsgemäß ist vorgesehen, dass die Steuereinheit dazu eingerichtet ist, den Lichtempfänger zusätzlich für die Dauer eines zeitlich vor dem Erfassungszeitfenster beginnenden ersten Kontrollzeitfensters zum Erfassen eines ersten Kontrollsignalverlaufs und für die Dauer eines zeitlich nach dem Erfassungszeitfenster endenden, nicht mit dem ersten Kontrollzeitfenster überlappenden zweiten Kontrollzeitfensters zum Erfassen eines zweiten Kontrollsignalverlaufs zu aktivieren, auf der Grundlage eines Größenverhältnisses zwischen einer aus dem ersten Kontrollsignalverlauf abgeleiteten ersten Kontrollgröße und einer aus dem zweiten Kontrollsignalverlauf abgeleiteten zweiten Kontrollgröße ein Störsignalmaß zu ermitteln und zumindest auf der Grundlage des Störsignalmaßes die genannten Zeitabstände anzupassen.

Bei den genannten Empfangslichtsignalen handelt es sich nicht nur um Lichtsignale, welche vom zugeordneten Lichtsender ausgesendet und direkt oder indirekt, d.h. nach einer Reflexion an einem Objekt oder einem der Sensoranordnung zugeordneten Reflektor empfangen wurden, sondern es können auch Störlichtsignale als Empfangslichtsignale empfangen werden, welche von externen Lichtsendern wie Störlichtquellen oder aber auch von Lichtsendern benachbarter Sensoranordnungen ausgesendet wurden. Der Lichtempfänger ist dazu eingerichtet, die Empfangslichtsignale in grundsätzlich bekannter Weise in elektrische Empfangssignale zu wandeln. In der Regel sendet der Lichtsender außerhalb der Sendezeitdauer keine Lichtsignale.

Bevorzugt ist auch der Lichtempfänger außerhalb des Erfassungszeitfensters und außerhalb der Kontrollzeitfenster inaktiv, wobei "inaktiv" nicht zwingend so zu verstehen ist, dass der Lichtempfänger vollständig stromlos geschaltet sein muss, sondern dass während der "Inaktivität" ein Auslesen eines Sensorelements des Lichtempfängers und/oder eine Auswertung, Wandlung und/oder Übermittlung von Signalen unterbleibt. Da der Betrieb des Lichtempfängers sowie eines gegebenenfalls vorhandenen, dem Lichtempfänger oder der Steuereinheit zugeordneten Analog-Digital-Wandlers (AD-Wandler) mit einem nicht unerheblichen Energieverbrauch verbunden ist, wird der Lichtempfänger und gegebenenfalls auch der zugeordnete AD-Wandler zum Beispiel nur dann aktiviert, wenn tatsächlich eine Erfassung bzw. Auswertung von Empfangslichtsignalen und/oder Störsignalen erfolgen soll. Für die restliche Zeit wird der Lichtempfänger von der Steuereinheit deaktiviert. Dadurch vermindert sich der Stromverbrauch der Sensoranordnung, so dass sich deren thermische Belastung und damit auch die Anforderungen an die Kühlung der Komponenten der Sensoranordnung reduziert. Eine vollständige Stromlosschaltung des Lichtempfängers verbessert die Energiebilanz besonders effektiv.

Die genannten Kontrollsignalverläufe repräsentieren einen Amplituden- oder Intensitätsverlauf der während der Dauer der jeweiligen Kontrollzeitfenster erfassten Empfangssignale. Die genannten ersten und zweiten Kontrollzeitfenster sind jeweils einem Erfassungszeitfenster eines bestimmten Zyklus zugeordnet. Mit anderen Worten werden für einen jeweiligen Zyklus jeweils ein erstes Kontrollzeitfenster, ein Erfassungszeitfenster und ein zweites Kontrollzeitfenster betrachtet. Grundsätzlich ist auch der Fall umfasst, dass das zweite Kontrollzeitfenster eines jeweiligen Zyklus zugleich das erste Kontrollzeitfenster des unmittelbar folgenden Zyklus bildet. In der Regel liegt jedoch zwischen dem zweiten Kontrollzeitfenster eines bestimmten Zyklus und dem ersten Kontrollzeitfenster des unmittelbar folgenden Zyklus ein Zeitraum, in dem der Lichtempfänger nicht aktiv ist.

Der Erfindung liegt der Gedanke zugrunde, für begrenzte Zeiträume, nämlich die genannten Kontrollzeitfenster, welche zeitlich vor und nach dem eigentlichen Erfassungszeitfenster, für den der Empfang der direkt oder indirekt empfangenen, vom Lichtsender ausgesendeten Lichtsignale erwartet wird, einen jeweiligen Verlauf der Erfassungssignale, nämlich die genannten Kontrollsignalverläufe zu erfassen und auszuwerten. Diese Auswertung erfolgt in der Steuereinheit, welche somit auch als Auswerteeinheit bzw. als kombinierte Steuer- und Auswerteeinheit bezeichnet werden kann. Innerhalb der Kontrollzeitfenster werden gegebenenfalls vorhandene, insbesondere periodisch auftretende Störsignale, welche beispielsweise von einem benachbarten Lichtsender einer baugleichen Sensoranordnung stammen können, empfangen und ausgewertet. Eine Besonderheit besteht darin, dass nicht einfach nur auf das Vorhandensein oder Nichtvorhandensein eines Störsignals abgestellt wird, sondern durch die Ermittlung eines Störsignalmaßes auch eine Quantifizierung erfolgt, wobei diese Quantifizierung verschiedene Kriterien, jeweils für sich oder in Kombination, umfassen kann, beispielsweise eine Änderungsrate der Empfangssignalamplitude oder -intensität oder die zeitliche Lage einer oder mehrerer Empfangssignalpeaks innerhalb eines jeweiligen Kontrollzeitfensters. In Abhängigkeit von dem auf diese Weise ermittelten Störsignalmaß können die genannten Zeitabstände, in denen der Lichtsender zum Aussenden der Lichtsignale und der Lichtempfänger zum Empfang derjenigen Empfangslichtsignale aktiviert werden, welche die Grundlage für das Objekterfassungssignal bilden, verlängert oder verkürzt werden, wobei das Maß für die Verlängerung oder Verkürzung in Abhängigkeit von dem Störsignalmaß gewählt werden kann. Insbesondere wenn keine Störsignale festgestellt wurden und damit das Störsignalmaß gleich Null ist, kann eine Änderung der Zeitabstände unterbleiben.

Zum besseren Verständnis der Erfindung soll nachfolgend eine Anwendungssituation beschrieben werden, bei welcher zwei baugleiche Sensoranordnungen derart benachbart zueinander betrieben werden, dass aufgrund der räumlichen Gegebenheiten nicht ausgeschlossen werden kann, dass der Lichtempfänger der einen Sensoranordnung auch Lichtsignale von dem Lichtsender der anderen Sensoranordnung in Form von unerwünschten Störsignalen empfangen kann. Es wird angenommen, dass beide Sensoranordnungen im Prinzip mit der gleichen anfänglichen Zyklusdauer, d.h. mit den gleichen vorbestimmten Zeitabständen betrieben werden. Eine Synchronisierung zwischen beiden Sensoranordnungen ist nicht vorgesehen. Die Zeitabstände werden auf der Grundlage von geeigneten Taktgebern, beispielsweise quarzbasierten Schwingkreisen erzeugt. In der Regel ist davon auszugehen, dass zwischen den Zyklen der beiden Sensoranordnungen ein gewisser Zeitversatz besteht, welcher bei ideal baugleichen Taktgebern theoretisch konstant bleiben sollte. In der Praxis kann sich dieser Zeitversatz aufgrund von Bauteiltoleranzen und/oder thermischen Einflüssen mit der Zeit jedoch ändern. Ohne geeignete Maßnahmen kann dies dazu führen, dass das von dem Lichtsender der einen Sensoranordnung ausgesendete Lichtsignal ganz oder teilweise in das Erfassungszeitfenster des Lichtempfängers der anderen Sensoranordnung hineinfällt und zu entsprechenden Störungen, insbesondere zu falsch-positiven oder falsch-negativen Objekterfassungssignalen führt.

Durch die erfindungsgemäße Betrachtung der Kontrollsignalverläufe in den jeweiligen Kontrollzeitfenstern kann jedoch bereits vor Eintritt dieses Falls festgestellt werden, ob sich ein solches Störsignal dem Erfassungszeitfenster "annähert". Um eine "Kollision" eines derartigen Störsignals mit dem eigentlichen Erfassungszeitfenster zu vermeiden, wird durch die Anpassung der Zeitabstände die zeitliche Lage des Erfassungszeitfensters in Bezug auf das Störsignal verschoben und dadurch dem Störsignal sozusagen "ausgewichen". Durch die Betrachtung der Signalverläufe in den jeweiligen zeitlich vor und nach dem Erfassungszeitfenster liegenden Kontrollzeitfenster zur Ermittlung des Störsignalmaßes kann sowohl die Richtung als auch der Betrag einer gegebenenfalls notwendigen Anpassung der genannten Zeitabstände ermittelt werden.

Eine aufwändige Synchronisation der Sensoranordnungen durch Übermittlung von Triggersignalen per Funk oder über zusätzliche Triggerleitungen oder dergleichen kann dadurch entfallen.

Gemäß einer vorteilhaften Ausführungsform der Erfindung beträgt die jeweilige Dauer des ersten und/oder des zweiten Kontrollzeitfensters weniger als 40%, bevorzugt nicht mehr als 20%, besonders bevorzugt nicht mehr als 15% der durchschnittlichen oder anfänglichen Dauer der vorbestimmten Zeitabstände. Unter der durchschnittlichen Dauer wird insbesondere eine Zeitdauer verstanden, die über viele Zyklen gemittelt wurde und auch angepasste Zeitdauern mit einbezieht. Unter der anfänglichen Dauer wird insbesondere derjenige vorbestimmte Zeitabstand verstanden, der nach einem Einschalten der Sensoranordnung angewendet wird, d.h. ein Nenn-Zeitabstand, welcher etwaige, durch Störsignale bedingte Anpassungen nicht umfasst. Durch diese Beschränkung der Aktivierungsdauer des Lichtempfängers und insbesondere auch der Aktivierungsdauer eines dem Lichtempfänger oder der Steuereinheit zugeordneten AD-Wandlers wird der Energieverbrauch der Sensoranordnung und damit auch eine thermische Belastung der Sensoranordnung erheblich reduziert. Dies ermöglicht es, die Sensoranordnung kompakt zu bauen, was eine vielseitige Verwendbarkeit auch bei beengten Platzverhältnissen erlaubt. Bei einer beispielhaften Sensoranordnung kann die durchschnittliche Dauer der vorbestimmten Zeitabstände 126 μs betragen, während das erste und das zweite Kontrollzeitfenster jeweils eine Länge von 16 μs aufweisen.

Vorteilhafterweise beträgt die Zeitdauer, für welche der Lichtempfänger aktiviert ist, weniger als 50%, bevorzugt weniger als 40% der durchschnittlichen oder anfänglichen Dauer der vorbestimmten Zeitabstände. Die genannte Zeitdauer, für welche der Lichtempfänger aktiviert ist, umfasst insbesondere das erste und zweite Kontrollzeitfenster und das Erfassungszeitfenster. Bei einer beispielhaften Sensoranordnung kann die durchschnittliche Dauer der vorbestimmten Zeitabstände beispielsweise 126 μs, die der Länge des ersten und zweiten Kontrollzeitfensters jeweils 16 μs und die der Länge des Erfassungszeitfensters 19 μs betragen, wobei sich das Erfassungszeitfenster jeweils für 3 μs mit einem jeweiligen Kontrollzeitfenster überlappt. Daraus ergibt sich eine Aktivierungsdauer des Lichtempfängers und gegebenenfalls eines zugeordneten AD-Wandlers von 45 μs. Die auch als "duty cycle" bezeichnete relative Einschaltdauer beträgt dann somit 35,7%.

Gemäß einer weiteren vorteilhaften Ausführungsform ist die Steuereinheit ferner dazu eingerichtet, die genannten Zeitabstände derart anzupassen, dass für einen Zyklus oder einige wenige Zyklen der vorgegebene Zeitabstand um ein vorgegebenes Maß verkürzt oder verlängert und für nachfolgende Zyklen auf den ursprünglichen Wert zurückgesetzt wird. Unter dem ursprünglichen Wert der Zeitabstände wird insbesondere der Wert für die Zeitabstände verstanden, welcher vor der genannten ein- oder mehrmaligen Verkürzung oder Verlängerung gesetzt war. Die beschriebene vorübergehende Verkürzung oder Verlängerung der Zeitabstände beschränkt sich insbesondere auf nicht mehr als fünf, bevorzugt nicht mehr als zwei oder drei Zyklen.

Die genannte einmalige oder auf einige wenige Zyklen beschränkte mehrmalige Verkürzung oder Verlängerung kann insbesondere auf der Grundlage einer weiteren Bedingung erfolgen. Diese Bedingung kann umfassen, dass festgestellt wurde, dass ein etwaiges Störsignal ganz oder teilweise innerhalb des Erfassungszeitfensters empfangen wurde. Um Fehlanpassungen auszuschließen, kann die genannte vorübergehende Anpassung erst dann vorgenommen werden, wenn das genannte Störsignal mehrmals in der vorstehend beschriebenen kritischen Lage empfangen wurde, beispielsweise dreimal nacheinander.

Das vorstehend genannte vorgegebene Maß, um welches die Zeitdauer verkürzt oder verlängert wird, kann vorteilhafterweise zwischen 50 und 80% der durchschnittlichen oder anfänglichen Dauer der vorbestimmten Zeitabstände betragen, bevorzugt genau 50% oder 75%.

Dadurch wird innerhalb weniger Zyklen wieder ein ausreichender Zeitabstand zwischen dem Störsignal und dem Erfassungszeitfenster hergestellt.

Gemäß einer vorteilhaften Ausführungsform der Erfindung werden die Kontrollgrößen derart ermittelt, dass das Störsignalmaß ein Maß für den zeitlichen Abstand eines zeitlich vor oder nach dem Erfassungszeitfenster empfangenen Störsignals zu dem Erfassungszeitfenster ist. Das Störsignalmaß kann somit dann auch als ein Störsignalabstandsmaß bezeichnet werden und stellt insbesondere ein Maß für das Vorzeichen und den Betrag des zeitlichen Abstandes dar, wie es vorstehend bereits erwähnt wurde.

Erfindungsgemäß umfasst das Erfassen des ersten und/oder des zweiten Kontrollsignalverlaufs das Empfangen und Abtasten der innerhalb des jeweils zugeordneten Kontrollzeitfensters erfassten Empfangssignale zum Erzeugen von diskreten Abtastwerten. Die Abtastrate kann dabei so gewählt werden, dass eine geeignete Anpassung an eine typische Bandbreite zu erwartender Störsignalpulse oder Störsignalpulsfolgen gewährleistet ist.

In dem Zusammenhang hat es sich als vorteilhaft erwiesen, wenn das Erfassen des ersten und/oder des zweiten Kontrollsignalverlaufs ferner eine vor dem Abtasten durchgeführte Filterung, insbesondere Tiefpassfilterung umfasst. Eine derartige Tiefpassfilterung kann durch eine sogenannte Hochpass-Kopplung mittels eines Transimpedanzverstärkers erfolgen. Auch eine Filterung durch ein Filter mit endlicher Impulsantwort, ein sogenanntes FIR-Filter (von englisch "Finite Impulse Response Filter") kann vorgesehen werden.

Erfindungsgemäß erfolgt das Ermitteln der ersten und/oder der zweiten Kontrollgröße auf der Grundlage einer ermittelten Änderungsrate der jeweils zugeordneten Abtastwerte. Die genannte Änderungsrate beschreibt qualitativ oder quantitativ das Maß der Änderung zwischen benachbarten Abtastwerten. Dies erlaubt es insbesondere, die zeitliche Lage von Störsignalen zu ermitteln. Hierdurch kann insbesondere auch eine quantitative Auswertung von Störsignalen erfolgen, welche aus einer Pulsfolge bestehen und/oder mit ihrem zeitlichen Verlauf nur teilweise in eines der Kontrollzeitfenster hineinfallen.

Erfindungsgemäß umfasst das Ermitteln der Änderungsrate der jeweils zugeordneten Abtastwerte des ersten und/oder des zweiten Kontrollsignalverlaufs, dass für jedes mögliche Paar von benachbarten Abtastwerten des jeweiligen Kontrollsignalverlaufs jeweils der Absolutbetrag der Differenz dieser Abtastwertpaare ermittelt wird und die ermittelten Absolutbeträge aufsummiert werden. Unter benachbarten Abtastwerten werden unmittelbar zeitlich benachbarte Abtastwerte verstanden, wobei ein bestimmter Abtastwert zu einem oder auch zu zwei jeweiligen Paaren von Abtastwerten gehören kann. Diese vorstehend genannte Ermittlung der Änderungsrate entspricht einer diskreten Differenzierung, Gleichrichtung und Aufsummierung des Kontrollsignalverlaufs. Somit werden die erste und die zweite Kontrollgröße, insbesondere auf der Grundlage der Summe der ermittelten Absolutbeträge ermittelt. Grundsätzlich sind jedoch auch weitere Methoden für die Ermittlung der Änderungsrate denkbar. So kann zum Beispiel die Änderungsrate auf der Grundlage der Summe der Absolutbeträge der jeweiligen Differenzen der quadrierten benachbarten Abtastwerte ermittelt werden.

Gemäß einer weiteren vorteilhaften Ausführungsform der Erfindung entspricht das genannte Größenverhältnis der Differenz der ersten und der zweiten Kontrollgröße. Gegebenenfalls können hier zusätzlich auch entsprechende Normierungs- oder Skalierungsschritte vorgesehen werden. Alternativ kann das genannte Größenverhältnis der Kontrollgrößen auch auf der Grundlage eines Quotienten der ersten und zweiten Kontrollgröße ermittelt werden.

Erfindungsgemäß ist ein jeweiliges für die Sendezeitdauer ausgesendetes Lichtsignal eine Lichtpulsfolge. Die Lichtpulsform ist hierbei insbesondere rechteckig. Es hat sich als vorteilhaft erwiesen, wenn die jeweilige Dauer des ersten und/oder des zweiten Kontrollzeitfensters und/oder des Erfassungszeitfensters veränderbar ist. Hierfür kann insbesondere eine jeweilige Eingabeeinrichtung vorgesehen sein.

Vorteilhafterweise grenzt das erste und/oder das zweite Kontrollzeitfenster zeitlich unmittelbar an das Erfassungszeitfenster an oder überlappt teilweise mit diesem. Unter einer teilweisen Überlappung wird verstanden, dass ein Teilbereich, insbesondere der überwiegende Teil eines jeweiligen Kontrollzeitfensters, außerhalb des Erfassungszeitfensters liegt.

Gemäß einer weiteren vorteilhaften Ausführungsform ist vorgesehen, dass nach einer mehrmaligen Verkürzung der Zeitabstände, insbesondere nach Unterschreiten eines vorgegebenen Mindestzeitabstands und/oder nach Erreichen einer vorgegebenen Anzahl von aufeinanderfolgenden Verkürzungen, eine Verlängerung der Zeitabstände und/oder nach einer mehrmaligen Verlängerung der Zeitabstände, insbesondere nach Überschreiten eines vorgegebenen Mindestzeitabstands und/oder nach Erreichen einer vorgegebenen Anzahl von aufeinanderfolgenden Verlängerungen, eine Verkürzung der Zeitabstände erfolgt, wobei bevorzugt das Maß für die Verlängerung und/oder die Verkürzung mindestens der zweifachen Dauer des Erfassungszeitfensters entspricht. Das Maß für die Verlängerung und/oder die Verkürzung kann insbesondere zwischen der zweifachen und der dreifachen Dauer des Erfassungszeitfensters betragen. Dadurch wird verhindert, dass die Zyklendauer zu kurz oder zu lang wird, insbesondere, wenn zwei benachbarte Sensoranordnungen gegenseitig versuchen, einander "auszuweichen". Dadurch wird zum einen verhindert, dass bei einer zu kurzen Zyklendauer die relative Einschaltzeit des Lichtempfängers zu stark ansteigt, was thermische Probleme zur Folge haben könnte und zum anderen vermieden, dass aufgrund einer zu langen Zyklendauer die Ansprechzeit der Sensoranordnung über ein tolerierbares Maß hinaus ansteigt. Die genannten Anzahlen der aufeinanderfolgenden Verkürzungen bzw. Verlängerungen können gleich oder auch unterschiedlich groß sein.

Die Erfindung betrifft ferner ein Sensorsystem mit mindestens zwei Sensoranordnungen gemäß zumindest einer erfindungsgemäßen oder vorteilhaften Ausführungsform. Bei einem derartigen Sensorsystem können die Vorteile einer erfindungsgemäßen Sensoranordnung in besonderer Weise genutzt werden, da insbesondere der vorstehend beschriebene Fall berücksichtigt wird, bei dem Störsignale im Wesentlichen auf Lichtsignale zurückzuführen sind, die von einer benachbart angeordneten Sensoranordnung stammen.

Weitere vorteilhafte Ausführungsformen der Erfindung ergeben sich aus den Unteransprüchen, der Beschreibung und der Zeichnung, wobei einzelne Merkmale und/oder Merkmalsgruppen in geeigneter Weise - auch abweichend von den hier explizit erwähnten Merkmalskombinationen - miteinander kombiniert werden können.

Die Erfindung wird nachfolgend anhand eines Ausführungsbeispiels mit Bezug auf die Zeichnungen beschrieben. Es zeigen:

Fig. 1        ein Blockschaltbild einer optoelektronischen Sensoranordnung gemäß einem Ausführungsbeispiel;

Fig. 2        ein schematisches Zeitdiagramm für beispielhafte Empfangslichtsignale und zugeordnete Zeitfenster;

Fig. 3A       ein zeitlicher Signalverlauf eines von einem Lichtempfänger der Sensoranordnung erfassten Empfangslichtsignals;

Fig. 3B       der Signalverlauf des erfassten Empfangslichtsignals nach erfolgter Tiefpassfilterung;

Fig. 4A       ein schematisches Zeitdiagramm von Sende- bzw. Empfangssignalen, welche von zwei optoelektronischen Sensoranordnungen gemäß dem Stand der Technik erfasst wurden; und

Fig. 4B       ein schematisches Zeitdiagramm mit Empfangssignalen und zugeordneten Kontrollzeitfenstern, welche von zwei benachbart angeordneten optoelektronischen Sensoranordnungen gemäß dem Ausführungsbeispiel von Fig. 1 erfasst wurden.

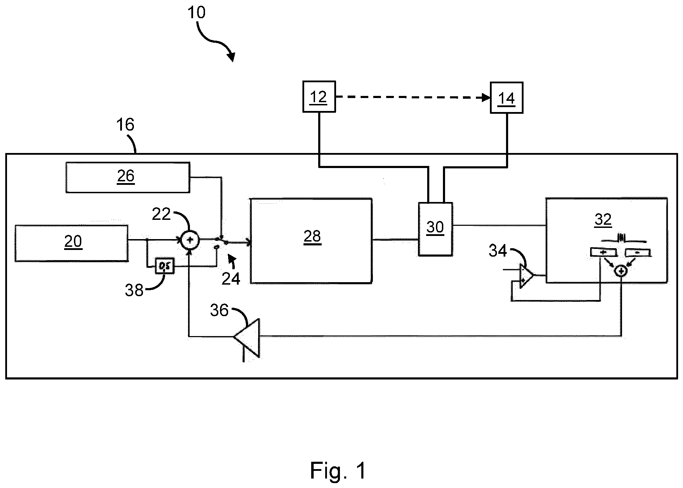

Fig. 1 zeigt ein Blockschaltbild einer optoelektronischen Sensoranordnung 10 gemäß einem Ausführungsbeispiel der vorliegenden Erfindung. Die Sensoranordnung 10 umfasst einen Lichtsender 12, welcher durch einen gestrichelt dargestellten Pfeil symbolisierte Lichtsignale in Richtung eines Lichtempfängers 14 aussendet. Die im Ausführungsbeispiel dargestellte optische Konfiguration von Lichtsender 12 und Lichtempfänger 14 entspricht somit einer Einweglichtschranke, wobei diese optische Konfiguration nur beispielhaft gewählt ist und auch andere optische Konfigurationen wie Mehrweglichtschranken oder Lichttaster gewählt sein können.

Der Lichtsender 12 und der Lichtempfänger 14 sind mit einer Steuereinheit 16 verbunden, welche zum Ansteuern des Lichtsenders 12 und des Lichtempfängers 14 und zum Erfassen und Auswerten von elektrischen Empfangssignalen eingerichtet ist, welche von dem Lichtempfänger 14 durch Umwandeln von erfassten Empfangslichtsignalen erzeugt wurden. Die Steuereinheit 16 kann somit auch als kombinierte Steuer- und Auswerteeinheit bezeichnet werden. Die Übermittlung der Empfangssignale kann in analoger oder digitaler Form erfolgen. Eine Digitalisierung der Empfangssignale kann durch einen AD-Wandler erfolgen, der in dem Lichtempfänger 14 oder in der Steuereinheit 16 vorgesehen sein kann.

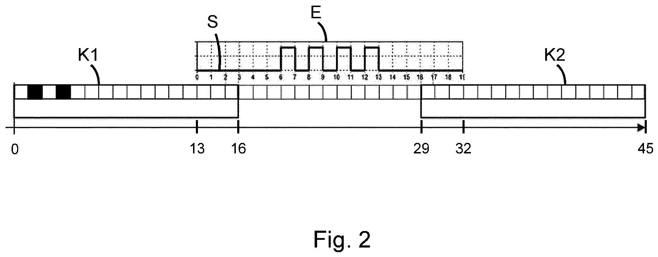

Die Steuereinheit 16 ist dazu eingerichtet, den Lichtsender 12 zyklisch in vorbestimmten Zeitabständen bzw. mit einer vorbestimmten Taktrate für eine vorbestimmte Sendezeitdauer zum Aussenden eines jeweiligen Lichtsignals anzusteuern, wobei ein jeweiliges Lichtsignal aus einer Folge einer vorgegebenen Anzahl von Rechteckpulsen besteht. Die Steuereinheit 16 ist ferner dazu eingerichtet, den Lichtempfänger 14 für die Dauer eines Erfassungszeitfensters E (Fig. 2), welches zumindest die Sendezeitdauer umfasst, zu aktivieren, wobei ein Objekterfassungssignal, welches die Anwesenheit eines Objekts in dem Überwachungsbereich signalisiert, auf der Grundlage der während des Erfassungszeitfensters E erfassten Empfangslichtsignale erzeugt wird.

Die Steuereinheit 16 ist ferner dazu eingerichtet, den Lichtempfänger 14 zusätzlich für die Dauer eines zeitlich vor dem Erfassungszeitfenster E beginnenden ersten Kontrollzeitfensters K1 zum Erfassen eines ersten Kontrollsignalverlaufs und für die Dauer eines zeitlich nach dem Erfassungszeitfenster K2 endenden, nicht mit dem ersten Kontrollzeitfenster K1 überlappenden zweiten Kontrollzeitfensters K2 zum Erfassen eines zweiten Kontrollsignalverlaufs zu aktivieren. Die Bedeutung der genannten Zeitfenster E, K1, K2 wird nachfolgend noch näher erläutert.

Die Steuereinheit 16 ermittelt auf der Grundlage eines Größenverhältnisses zwischen einer aus dem ersten Kontrollsignalverlauf abgeleiteten ersten Kontrollgröße und einer aus dem zweiten Kontrollsignalverlauf abgeleiteten Kontrollgröße ein Störsignalmaß. Auf der Grundlage dieses Störsignalmaßes kann die Steuereinheit 16 die genannten Zeitabstände anpassen, mit denen die jeweiligen Lichtsignale ausgesendet werden und der Lichtempfänger 14 jeweils aktiviert wird.

Mit Bezug auf Fig. 1 wird der schematische Aufbau der Steuereinheit 16 näher erläutert. Die Steuereinheit 16 umfasst ein Taktfrequenzvorgabemodul 20, welches eine Basistaktfrequenz erzeugt oder vorgibt, welche einen Nennwert für die Dauer eines jeweiligen Zyklus, in welchem jeweils ein Lichtsignal ausgesendet und empfangen wird, vorgibt. Die Basistaktfrequenz stellt somit einen reziproken Wert eines Nenn-Zeitabstands zur Ermittlung der genannten vorbestimmten Zeitabstände dar. Sofern keine Anpassungen der genannten Zeitabstände erfolgen, kann eine aus der Basistaktfrequenz abgeleiteter vorbestimmter Zeitabstand auch als anfänglicher vorbestimmter Zeitabstand angesehen werden.

Die Basistaktfrequenz wird einem Addierer 22 zugeführt, welcher zu der Basistaktfrequenz eine positive oder negative Anpassungstaktfrequenz hinzu addieren kann, so dass sich in Abhängigkeit vom Vorzeichen und dem Betrag der Anpassungstaktfrequenz der Wert einer von dem Addierer 22 ausgegebenen Taktfrequenz erhöht oder vermindert, so dass sich entsprechend die genannten Zeitabstände verkürzen bzw. verlängern. Die von dem Taktfrequenzvorgabemodul 20 erzeugte Basistaktfrequenz wird ferner einem Frequenzteiler 38 zugeführt, welcher im Ausführungsbeispiel die Basistaktfrequenz halbieren kann.

Die Ausgänge des Addierers 22 und des Frequenzteilers 38 können über einen Frequenzselektor 24 wahlweise einem entsprechenden Eingang eines Fenstergenerators 28 zugeführt werden. Die Ansteuerung des Frequenzselektors 24 erfolgt über ein Frequenzselektorsteuermodul 26, dessen Funktionalität nachfolgend noch näher beschrieben wird.

Der Fenstergenerator 28 ist dazu eingerichtet, das Erfassungszeitfenster E und die Kontrollzeitfenster K1, K2 zu erzeugen, in welchen der Lichtempfänger 14 aktiviert ist. Ferner kann der Fenstergenerator 28 auch ein Sendezeitfenster bzw. die Pulsfolgen für den Lichtsender 12 erzeugen. Die von dem Fenstergenerator 28 erzeugten Zeitfenster bzw. Pulsfolgen werden an einen Multiplexer 30 übermittelt, welcher entsprechende Steuersignale, die die genannten Zeitfenster bzw. Pulsfolgen definieren, an den Lichtsender 12 bzw. den Lichtempfänger 14 übermittelt. Die vom Lichtempfänger 14 erzeugten elektrischen Erfassungssignale werden ebenfalls vom Multiplexer 30 empfangen und an ein Auswertemodul 32 weitergeleitet. Die genannten Zeitfenster werden vom Multiplexer 30 zusätzlich an das Auswertemodul 32 übermittelt, so dass das Auswertemodul 32 die Empfangssignale den jeweiligen Zeitfenstern zuordnen kann.

Innerhalb des Auswertemoduls 32 wird der für das erste Kontrollzeitfenster K1 ermittelte erste Kontrollsignalverlauf und der für das zweite Kontrollzeitfenster K2 ermittelte zweite Kontrollsignalverlauf in einer nachfolgend noch näher beschriebenen Weise ausgewertet, um daraus die erste und die Kontrollgröße zu ermitteln. Die erste Kontrollgröße wird in der Darstellung des Auswertemoduls 32 durch ein mit einem "+" versehenes Kästchen und die zweite Kontrollgröße durch ein mit einem "-" versehenes Kästchen repräsentiert. Aus den beiden Kontrollgrößen wird durch Differenzbildung ein Störsignalmaß erzeugt und an ein Skalierungsmodul 36 übermittelt.

Das Skalierungsmodul 36 ist dazu eingerichtet, aus dem Störsignalmaß die genannte Anpassungsfrequenz zu ermitteln und diese an den Addierer 22 zu übermitteln. Das Skalierungsmodul 36 kann über einen weiteren Eingang ein fest vorgegebenes oder durch Benutzereingabe veränderbares Skalierungsmaß empfangen, welches die Grundlage für die Umrechnung des Störsignalmaßes in die Anpassungstaktfrequenz bildet. Die Anpassungsfrequenz kann beispielsweise mittels eines Skalierungsfaktors, einer linearen oder auch einer nichtlinearen Skalierungsfunktion als Skalierungsmaß aus dem Störsignalmaß errechnet werden.

Die im Auswertemodul 32 ermittelte erste Kontrollgröße wird ferner an ein Komparatormodul 34 übermittelt, welches die erste Kontrollgröße mit einem Schwellenwert vergleicht. Falls die erste Kontrollgröße den vorgegebenen Schwellenwert überschreitet, empfängt das Auswertemodul 32 an einem weiteren Eingang ein entsprechendes Signal von dem Komparatormodul 34 und veranlasst einen Neustart der Sensoranordnung 10. Diese Durchführung eines Neustarts wird nachfolgend noch näher erläutert.

Mit Bezug auf Fig. 2 wird im Folgenden die Definition und die Auswertung der verschiedenen Zeitfenster näher erläutert. Alle Zeitangaben beziehen sich auf das hier beschriebene Beispiel und können selbstverständlich auch von den genannten Werten abweichen.

Die horizontale Achse des Diagramms von Fig. 2 repräsentiert die Zeit t in μs, wobei als kleinste Zeiteinheit oder Zeitraster vereinfachend eine Zeit von 1 μs vorgegeben ist, welches in den Zeitfenstern E, K1, K2 durch entsprechende Kästchen symbolisiert ist. Die Länge der beiden Kontrollzeitfenster K1, K2 beträgt jeweils 16 μs und die Länge des Erfassungszeitfensters E 19 μs. Das Erfassungszeitfenster E überlappt sich sowohl mit dem ersten Kontrollzeitfenster K1 als auch mit dem zweiten Kontrollzeitfenster K2 jeweils um 3 μs, so dass die Zeitdauer vom Beginn des ersten Kontrollzeitfensters K1 bis zum Ende des zweiten Kontrollzeitfensters K2 45 μs beträgt. Diese Zeitdauer stellt die Einschaltzeitdauer des Lichtempfängers 14 innerhalb eines jeweiligen Zyklus dar. Bei einem vorbestimmten Zeitabstand (also dem Abstand der jeweils gegebenenfalls aus mehreren Lichtpulsen bestehenden Lichtsignale) bzw. einer Zyklusdauer von 126 μs beträgt die relative Einschaltzeit (englisch "duty cycle") des Lichtempfängers 14 37,5%. Ein in Fig. 2 dargestelltes Sendesignal S umfasst vier Rechteckpulse mit einer jeweiligen Pulsdauer von 1 μs und einer Pause zwischen zwei benachbarten Pulsen von ebenfalls 1 μs. Das Sendesignal S entspricht (in idealisierter Form) auch dem während des Erfassungszeitfensters E erfassten Empfangssignalverlauf. Auf der Grundlage dieses Empfangssignalverlaufs kann ein entsprechendes Objekterfassungssignal erzeugt werden, wobei die Auswertung des während des Erfassungszeitfensters E erfassten Empfangssignalverlaufs in grundsätzlich bekannter Weise und in Abhängigkeit von der optischen Konfiguration (Ein- oder Mehrweglichtschranke, Lichttaster, etc.) erfolgt.

Die Auswertung der Signalverläufe kann eine Abtastung und Analog-Digital-Wandlung der abgetasteten Signalwerte umfassen. Vereinfacht sei angenommen, dass die Abtastperiode ebenfalls 1 μs beträgt. Für jedes Kontrollzeitfenster K1, K2 werden somit sechzehn Abtastwerte $AW_1$, ..., $AW_{16}$ erzeugt. Allgemein wird aus N Abtastwerten $AW_1$, ..., $AW_N$ eines jeden Kontrollzeitfensters K1, K2 eine jeweilige Kontrollgröße KG1 bzw. KG2 gemäß Gleichung (1) ermittelt:

$$KG_{1,2} = \sum_{i=1}^{N-1} abs(AW_{i+1} - AW_i) \quad (1)$$

Somit wird für jedes mögliche Paar von benachbarten Abtastwerten $AW_i$, $AW_{i+1}$ eines jeweiligen Kontrollsignalverlaufs jeweils der Absolutbetrag der Differenz dieser Abtastwerte ermittelt und die ermittelten Absolutbeträge werden aufsummiert.

Diese Methode der Auswertung eignet sich in besonderer Weise dazu, solche Störsignale zu erkennen, welche auf Lichtpulsfolgen zurückzuführen sind, wie sie beispielsweise von benachbarten, insbesondere baugleichen Sensoranordnungen ausgesendet werden. Ein solches burstartiges Störsignal ist in Fig. 2 beispielhaft im Kontrollzeitfenster K1 durch die beiden dunkel ausgefüllten Kästchen repräsentiert, d.h. die beiden Kästchen repräsentieren zwei Pulse eines Sendelichtsignals einer benachbarten Sensoranordnung. Nimmt man vereinfacht an, dass für diese beiden schwarzen Kästchen der Abtastwert AW jeweils 1 beträgt und ansonsten 0, ergibt sich für die in Fig. 2 dargestellte Situation ein Wert für die erste Kontrollgröße KG1 = 4. Es sei angenommen, dass das in Fig. 2 erfasste Störsignal ebenso wie das Sendesignal S eine Länge von vier Lichtpulsen aufweise und zur Hälfte innerhalb des Kontrollzeitfensters K1 liege und zur anderen Hälfte außerhalb. Bei einem kleineren zeitlichen Abstand dieses Störsignals zum Erfassungszeitfenster E können möglicherweise alle vier Störpulse in das erste Kontrollzeitfenster K1 fallen. In dem Fall würde die erste Kontrollgröße KG1 gleich 8 betragen. Wird hingegen angenommen, dass das Störsignal nicht in das erste Kontrollzeitfenster K1 fällt, würde die erste Kontrollgröße KG1 = 0 betragen.

Unter der Annahme, dass das Störsignal annähernd die gleiche Zyklusdauer aufweist wie die Zyklusdauer der betrachteten Sensoranordnung 10, kann davon ausgegangen werden, dass auch in folgenden Zyklen das Störsignal eine ähnliche zeitliche Lage in Bezug auf das Erfassungszeitfenster E aufweist. Falls sich die Zyklendauern geringfügig unterscheiden, kann es je nach dem Unterschiedsbetrag dazu kommen, dass sich das Störsignal über mehrere Zyklen hinweg weiter an das Erfassungszeitfenster E annähert, was ohne Gegenmaßnahmen dazu führen würde, dass das Störsignal in das Erfassungszeitfenster E hineinwandert und zu einer Erzeugung eines falsch-positiven oder eines falsch-negativen Objekterfassungssignals führt.

Um dies zu verhindern, können die die Zyklusdauer bestimmende Taktfrequenz und damit die genannten vorbestimmten Zeitabstände angepasst werden.

Hierzu kann aus den Kontrollgrößen KG1, KG2 ein Störsignalmaß SM gemäß Gleichung (2) ermittelt werden:

$$SM = KG1 - KG2 \quad (2)$$

Weist das Störsignalmaß SM ein positives Vorzeichen auf, befindet sich das Störsignal zeitlich vor dem Erfassungszeitfenster E. Um diesem Störsignal "auszuweichen", ist somit eine Verlängerung der Zeitabstände bzw. eine Verminderung der Taktfrequenz erforderlich. Weist hingegen das Störsignalmaß SM ein negatives Vorzeichen auf, kann daraus geschlossen werden, dass sich das Störsignal zeitlich hinter dem Erfassungszeitfenster E befindet. Um dem Störsignal "auszuweichen", müssen daher die Zeitabstände verkürzt bzw. die Taktfrequenz erhöht werden.

Die notwendige Anpassung der Taktfrequenz erfolgt dadurch, dass das Skalierungsmodul 36 aus dem vom Auswertemodul 32 empfangenen Störsignalmaß SM und an einem aus einem am weiteren Eingang empfangenen Skalierungsfaktor eine positive oder negative Anpassungstaktfrequenz ermittelt, welche im Addierer 22 zu der Basistaktfrequenz hinzuaddiert wird.

Nachfolgend werden noch einige Abwandlungen und Sonderfälle beschrieben.

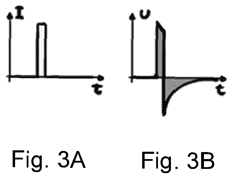

Gemäß einer vorteilhaften Abwandlung kann zusätzlich ein Filtermodul (nicht dargestellt) vorgesehen sein, welches die vom Lichtempfänger 14 erzeugten elektrischen Empfangssignale vor oder auch nach der Analog-Digital-Wandlung einer Tiefpassfilterung unterzieht. Die Tiefpassfilterung kann beispielsweise durch eine Hochpass-Kopplung mittels eines Transimpedanzverstärkers (TIA, von englisch "trans impedance amplifier") erfolgen. Eine solche Tiefpassfilterung erzeugt aus einem rechteckigen Empfangspuls I(t) (Fig. 3A) eine Impulsantwort U(t), wie sie in Fig. 3B dargestellt ist. Das Filtermodul wird vorteilhafterweise so konfiguriert, dass die Zeitkonstante für die ausschwingende Flanke ungefähr 10 $\mu$s beträgt. Dies hat den Vorteil, dass auch solche pulsförmigen Störsignale, welche nicht unmittelbar in ein Kontrollzeitfenster fallen, anhand der auslaufenden Negativflanke der Impulsantwort U(t) detektiert werden können.

Eine zusätzliche Überwachung auf Störsignale kann dadurch erfolgen, dass nach einem Einschalten der Sensoranordnung 10 vor einem erstmaligen Aussenden eines Lichtsignals die von dem Lichtempfänger 14 erzeugten Empfangssignale auf Anwesenheit von Störsignalen einer bestimmten Intensität überprüft werden. Diese Überprüfung erfolgt mittels des Komparatormoduls 34, welches die in die Kontrollzeitfenster K1, K2 fallenden Empfangssignale mit einem vorgegebenen Schwellenwert vergleicht und bei Überschreiten eines vorzugsweise einstellbaren Schwellenwerts den aktuellen Messvorgang abbricht und einen neuen Messzyklus startet. Alternativ kann bei einem Überschreiten des Schwellenwerts der aktuelle Messvorgang abgebrochen und ein Neustart der Sensoranordnung initiiert werden.

Ein weiterer Sonderfall ist dann gegeben, wenn zufälligerweise ein Störsignal genau in ein Erfassungszeitfenster E hineinfällt. In dem Fall würden beide Kontrollgrößen KG1, KG2 den Wert 0 aufweisen und keine Anpassung der Zeitabstände erfolgen. Ein solcher Fall kann jedoch ebenfalls mit Hilfe des Komparatormoduls 34 detektiert werden. Hier kann ebenfalls ein Abbruch und Neustart eines Messzyklus bzw. der Sensoranordnung erfolgen. Alternativ kann jedoch auch einmalig der Zeitabstand um 50% vermindert werden, was zum Beispiel durch eine einmalige Halbierung der Taktfrequenz vorgenommen werden kann. Hierzu kann das Auswertemodul 32 über eine nicht dargestellte Leitung das Frequenzselektorsteuermodul 26 entsprechend ansteuern, so dass vorübergehend die von dem Frequenzteiler 38 ausgegebene halbierte Basistaktfrequenz an den Fenstergenerator 28 weitergeleitet wird.

Ein weiterer Sonderfall kann darin bestehen, dass im laufenden Betrieb durch fortwährende Anpassungen sich die ursprüngliche vorbestimmte Zeitdauer (im Beispiel 126 $\mu$s) stetig verringert oder verkürzt. Eine zu starke Verringerung ist insofern problematisch als dass sich die relative Einschaltdauer des Lichtempfängers 14 stetig erhöht, was unter Umständen zu thermischen Problemen führen kann. Bei einer zu starken Verlängerung der Zeitabstände besteht die Gefahr darin, dass sich unter Umständen die Ansprechzeit der Sensoranordnung 10 über ein zulässiges Maß hinaus verlängert.

Um solche Effekte zu vermeiden, kann vorgesehen sein, dass bevorzugt einmalig der vorbestimmte Zeitabstand verkürzt bzw. verlängert wird. Wenn beispielsweise ein Störsignal zeitlich vor dem Empfangszeitfenster liegt und über die Zeit wiederholt in das erste Kontrollzeitfenster K1 hineinwandert, wird der Zeitabstand einmalig verkürzt, beispielsweise um eine Zeit, die der zwei- bis dreifachen Dauer des Erfassungszeitfensters entspricht. Hierdurch wird das Störsignal sozusagen auf die andere Seite des Empfangszeitfensters E "wandern". Umgekehrt wird bei einem zeitlich nach dem Empfangszeitfenster E liegenden, im Bereich des zweiten Kontrollzeitfensters K2 auftretenden Störsignals, welches wiederholt in das zweite Kontrollzeitfenster K2 hineinwandert eine einmalige Verlängerung des Zeitabstandes vorgenommen, so dass das Störsignal nunmehr zeitlich vor dem Empfangszeitfenster E auftritt. Diese einmalige Anpassung kann mittels einer Anpassung der Taktfrequenz über das Skalierungsmodul 36 oder durch Umschalten des Frequenzselektors 24 auf den Frequenzteiler 38 erfolgen.

Gemäß einer weiteren Abwandlung können bei der Ermittlung der Kontrollgrößen gemäß Gleichung (1) die Absolutbeträge mittels Skalierungsfaktoren derart gewichtet werden, dass diejenigen Absolutbeträge, die zeitlich näher an dem Erfassungszeitfenster E liegen, höher gewichtet werden, als weiter entfernt liegende Betragswerte. Somit kann insbesondere auch für solche Störsignale, die nicht aus einer Pulsfolge bestehen, sondern nur aus einem einzelnen Puls, ein Störsignalmaß ermittelt werden, das den zeitlichen Abstand des Störsignals zum Erfassungszeitfenster möglichst genau widerspiegelt.

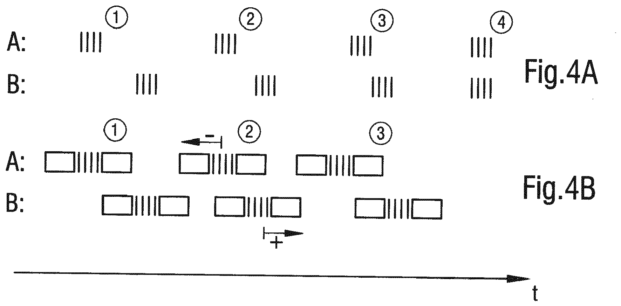

Mit Bezug auf Fig. 4A und 4B wird zusammenfassend ein Vorteil der vorliegenden Erfindung nochmals erläutert. In Fig. 4A sind über eine Zeitachse t jeweilige Empfangssignal-Pulsfolgen für benachbart angeordnete Sensoranordnungen A, B gemäß dem Stand der Technik dargestellt. Die Pulsfolgen weisen jeweils vier Pulse auf, welche durch vertikale Striche repräsentiert sind. Die Zeitabstände, mit denen die Pulsfolgen ausgesendet und empfangen werden, weichen leicht voneinander ab. Während im ersten Zyklus die von den Sensoranordnungen A, B empfangenen Pulse noch einen ausreichenden zeitlichen Abstand aufweisen, werden im vierten Zyklus die Pulsfolgen jeweils synchron ausgesendet und empfangen. Da angenommen wird, dass eine optische Abschirmung der Sensoranordnungen A, B voneinander zumindest nicht vollständig möglich ist, muss davon ausgegangen werden, dass dies zu entsprechenden gegenseitigen Störungen der Sensoranordnungen A, B führen kann.

Fig. 4B zeigt nun jeweilige Empfangssignalverläufe für zwei erfindungsgemäß gemäß einer Ausführungsform ausgebildete Sensoranordnungen A, B. Zusätzlich zu den Empfangssignalverläufen sind jeweilige Kontrollzeitfenster in Form von Kästchen dargestellt, welche unmittelbar vor und nach dem eigentlichen Empfangssignalverlauf vorgesehen sind. Während im Verlauf des ersten Zyklus noch keine Störsignale durch den Empfang von Lichtsignalen der jeweils anderen Sensoranordnung vorliegen, können im Verlauf des zweiten Zyklus einzelne Lichtpulse innerhalb eines jeweiligen Kontrollzeitfensters empfangen werden. Durch den Vergleich der beiden Kontrollzeitfenster einer jeweiligen Sensoranordnung A, B, d.h. durch Differenzbildung oder Quotientenbildung, kann auch die Richtung ermittelt werden, aus welcher sich ein Störsignal "annähert". Dementsprechend werden bei der Sensoranordnung A die Zeitabstände verkürzt (in Fig. 4B durch den mit "-" gekennzeichneten Pfeil verdeutlicht) und bei der Sensoranordnung B die Zeitabstände verlängert (durch den mit "+" gekennzeichneten Pfeil verdeutlicht). Im dritten Zyklus ist somit kein Auftreten von Störsignalen innerhalb der jeweiligen Kontrollzeitfenster mehr gegeben.

Bezugszeichenliste

| | |
|---|---|
| 10, A, B | optoelektronische Sensoranordnung |
| 12 | Lichtsender |
| 14 | Lichtempfänger |
| 16 | Steuereinheit |
| 20 | Taktfrequenzvorgabemodul |
| 22 | Addierer |
| 24 | Frequenzselektor |
| 26 | Frequenzselektorsteuermodul |
| 28 | Fenstergenerator |
| 30 | Multiplexer |
| 32 | Auswertemodul |
| 34 | Komparatormodul |
| 36 | Skalierungsmodul |
| 38 | Frequenzteiler |
| E | Empfangszeitfenster |
| K1 | erstes Kontrollzeitfenster |
| K2 | zweites Kontrollzeitfenster |
| S | Sendesignalverlauf |

**Patentansprüche**

1. Optoelektronische Sensoranordnung (10) zum Erfassen von in einem Überwachungsbereich vorhandenen Objekten, mit einem Lichtsender (12) zum Aussenden von Lichtsignalen, mit einem Lichtempfänger (14) zum Erfassen von Empfangslichtsignalen und zum Umwandeln der Empfangslichtsignale in elektrische Empfangssignale und mit einer mit dem Lichtsender (12) und dem Lichtempfänger (14) verbundenen Steuereinheit (16) zum Erzeugen eines Objekterfassungssignals, falls ein in dem Überwachungsbereich vorhandenes Objekt erfasst wurde, wobei die Steuereinheit (16) dazu eingerichtet ist, den Lichtsender (12) zyklisch in vorbestimmten Zeitabständen für eine vorbestimmte Sendezeitdauer zum Aussenden eines jeweiligen Lichtsignals anzusteuern, wobei ein jeweiliges für die Sendezeitdauer ausgesendetes Lichtsignal eine Lichtpulsfolge ist, den Lichtempfänger (14) zumindest für die Dauer eines Erfassungszeitfensters (E), welches die Sendezeitdauer umfasst, zu aktivieren, wobei das Objekterfassungssignal auf der Grundlage der während des Erfassungszeitfensters (E) erfassten Empfangslichtsignale erzeugt wird,

wobei die Steuereinheit (16) ferner dazu eingerichtet ist, den Lichtempfänger (14) zusätzlich für die Dauer eines zeitlich vor dem Erfassungszeitfenster (E) beginnenden ersten Kontrollzeitfensters (K1) zum Erfassen eines ersten Kontrollsignalverlaufs und für die Dauer eines zeitlich nach dem Erfassungszeitfenster (E) endenden, nicht mit dem ersten Kontrollzeitfenster (K1) überlappenden zweiten Kontrollzeitfensters (K2) zum Erfassen eines zweiten Kontrollsignalverlaufs zu aktivieren, auf der Grundlage eines Größenverhältnisses zwischen einer aus dem ersten Kontrollsignalverlauf abgeleiteten ersten Kontrollgröße und einer aus dem zweiten Kontrollsignalverlauf abgeleiteten zweiten Kontrollgröße ein Störsignalmaß zu ermitteln und zumindest auf der Grundlage des Störsignalmaßes die genannten Zeitabstände anzupassen, wobei das Erfassen des ersten und/oder des zweiten Kontrollsignalverlaufs das Empfangen und Abtasten der innerhalb des jeweils zugeordneten Kontrollzeitfensters (K1, K2) erfassten Empfangssignale zum Erzeugen von diskreten Abtastwerten umfasst, wobei das Ermitteln der ersten und/oder der zweiten Kontrollgröße auf der Grundlage einer ermittelten Änderungsrate der jeweils zugeordneten Abtastwerte erfolgt, und wobei das Ermitteln der Änderungsrate der jeweils zugeordneten Abtastwerte des ersten und/oder des zweiten Kontrollsignalverlaufs umfasst, dass für jedes mögliche Paar von benachbarten Abtastwerten des jeweiligen Kontrollsignalverlaufs jeweils der Absolutbetrag der Differenz dieser Abtastwerte ermittelt wird und die ermittelten Absolutbeträge aufsummiert werden,

2. Sensoranordnung (10) nach Anspruch 1,

**dadurch gekennzeichnet,**
**dass** die jeweilige Dauer des ersten und/oder des zweiten Kontrollzeitfensters (K1, K2) weniger als 40%, bevorzugt nicht mehr als 20%, besonders bevorzugt nicht mehr als 15% der durchschnittlichen oder anfänglichen Dauer der vorbestimmten Zeitabstände beträgt.

3. Sensoranordnung (10) nach Anspruch 1 oder 2, **dadurch gekennzeichnet,** **dass** die Zeitdauer, für welche der Lichtempfänger (14) aktiviert ist, weniger als 50%, bevorzugt weniger als 40% der durchschnittlichen oder anfänglichen Dauer der vorbestimmten Zeitabstände beträgt.

4. Sensoranordnung (10) nach einem der vorhergehenden Ansprüche, **dadurch gekennzeichnet,** **dass** die Steuereinheit (16) ferner dazu eingerichtet ist, die genannten Zeitabstände derart zu ändern, dass für einen Zyklus oder einige wenige Zyklen der vorgegebene Zeitabstand um ein vorgegebenes Maß verkürzt oder verlängert und für nachfolgende Zyklen auf den ursprünglichen Wert zurückgesetzt wird.

5. Sensoranordnung (10) nach Anspruch 4, **dadurch gekennzeichnet,** **dass** das vorgegebene Maß zwischen 50% und 80% der durchschnittlichen oder anfänglichen Dauer der vorbestimmten Zeitabstände beträgt, bevorzugt genau 50%.

6. Sensoranordnung (10) nach einem der vorhergehenden Ansprüche, **dadurch gekennzeichnet,** **dass** die Kontrollgrößen derart ermittelt werden, dass das Störsignalmaß ein Maß für den zeitlichen Abstand eines zeitlich vor oder nach dem Erfassungszeitfenster (E) empfangenen Störsignals zu dem Erfassungszeitfenster (E) ist.

7. Sensoranordnung (10) nach einem der vorhergehenden Ansprüche" **dadurch gekennzeichnet,** **dass** das Erfassen des ersten und/oder des zweiten Kontrollsignalverlaufs ferner eine vor dem Abtasten durchgeführte Filterung, insbesondere Tiefpassfilterung umfasst.

8. Sensoranordnung (10) nach einem der vorhergehenden Ansprüche, **dadurch gekennzeichnet,** **dass** das genannte Größenverhältnis der Differenz der ersten und der zweiten Kontrollgröße entspricht.

9. Sensoranordnung (10) nach einem der vorhergehenden Ansprüche,

      **dadurch gekennzeichnet,**
      **dass** die jeweilige Dauer des ersten und/oder des zweiten Kontrollzeitfensters (K1, K2) und/oder des Erfassungszeitfensters (E) veränderbar ist, insbesondere mittels einer jeweiligen Eingabeeinrichtung,
und/oder
**dass** das erste und/oder das zweite Kontrollzeitfenster (K1, K2) zeitlich unmittelbar an das Erfassungszeitfenster (E) angrenzt oder teilweise mit diesem überlappt.

10. Sensoranordnung (10) nach einem der vorhergehenden Ansprüche, **dadurch gekennzeichnet,** **dass** nach einer mehrmaligen Verkürzung der Zeitabstände, insbesondere nach Unterschreiten eines vorgegebenen Mindestzeitabstands und/oder nach Erreichen einer vorgegebenen Anzahl von aufeinanderfolgenden Verkürzungen, eine Verlängerung der Zeitabstände und/oder nach einer mehrmaligen Verlängerung der Zeitabstände, insbesondere nach Überschreiten eines vorgegebenen Mindestzeitabstands und/oder nach Erreichen einer vorgegebenen Anzahl von aufeinanderfolgenden Verlängerungen, eine Verkürzung der Zeitabstände erfolgt, wobei bevorzugt das Maß für die Verlängerung und/oder die Verkürzung mindestens der zweifachen Dauer des Erfassungszeitfensters (E) entspricht.

11. Sensoranordnung (10) nach einem der vorhergehenden Ansprüche, **dadurch gekennzeichnet,** **dass** der Lichtempfänger außerhalb des Zeitraumes, der dem Erfassungszeitfenster und den Kontrollzeitfenstern entspricht, inaktiv ist.

12. Sensorsystem mit mindestens zwei Sensoranordnungen (10) gemäß zumindest einem der vorhergehenden Ansprüche.

**Claims**

1. An optoelectronic sensor arrangement (10) for detecting objects present in a monitored zone, said optoelectronic sensor arrangement (10) comprising a light transmitter (12) for transmitting light signals; a light receiver (14) for detecting reception light signals and for converting the reception light signals into electrical reception signals; and a control unit (16) connected to the light transmitter (12) and the light receiver (14) for generating an object detection signal if an object present in the monitored zone has been detected, wherein the control unit (16) is configured to cyclically control the light transmitter (12) at predetermined time intervals for a predetermined transmission time duration for transmitting a respective light signal, wherein a respective light signal transmitted for the transmission time duration is a light pulse sequence, to activate the light receiver (14) at least for the duration of a detection time window (E) which comprises the transmission time duration, wherein the object detection signal is generated on the basis of the reception light signals detected during the detection time window (E), wherein the control unit (16) is further configured to additionally activate the light receiver (14) for the duration of a first control time window (K1), which starts before the detection time window (E) in time, for detecting a first control signal development and for the duration of a second control time window (K2), which ends after the detection time window (E) in time and does not overlap with the first control time window (K1), for detecting a second control signal development, to determine an interference signal measure on the basis of a size ratio between a first control variable derived from the first control signal development and a second control variable derived from the second control signal development and to adapt said time intervals at least on the basis of the interference signal measure,

wherein the detection of the first and/or the second control signal development comprises receiving and sampling the reception signals detected within the respective associated control time window (K1, K2) for generating discrete sampled values,

wherein the determination of the first and/or the second control variable takes place on the basis of a determined rate of change of the respective associated sampled values, and

wherein the determination of the rate of change of the respective associated sampled values of the first and/or the second control signal development comprises that, for each possible pair of adjacent sampled values of the respective control signal development, in each case the absolute amount of the difference of these sampled values is determined and the determined absolute amounts are summed.

2. A sensor arrangement (10) in accordance with claim 1,
   **characterized in that**
   the respective duration of the first and/or the second control time window (K1, K2) amounts to less than 40%, preferably no more than 20%, particularly preferably no more than 15%, of the average or initial duration of the predetermined time intervals.

3. A sensor arrangement (10) in accordance with claim 1 or claim 2, **characterized in that**
   the time duration for which the light receiver (14) is activated amounts to less than 50%, preferably less than 40%, of the average or initial duration of the predetermined time intervals.

4. A sensor arrangement (10) in accordance with any one of the preceding claims,
   **characterized in that**
   the control unit (16) is further configured to change said time intervals such that the predefined time interval is shortened or lengthened by a predefined measure for one cycle or a few cycles and is reset to the original value for subsequent cycles.

5. A sensor arrangement (10) in accordance with claim 4,
   **characterized in that**
   the predefined measure amounts to between 50% and 80% of the average or initial duration of the predetermined time intervals, preferably to exactly 50%.

6. A sensor arrangement (10) in accordance with any one of the preceding claims,
   **characterized in that**
   the control variables are determined such that the interference signal measure is a measure for the time interval of an interference signal, which is received before or after the detection time window (E) in time, from the detection time window (E).

7. A sensor arrangement (10) in accordance with any one of the preceding claims,
   **characterized in that**
   the detection of the first and/or the second control signal development further comprises a filtering, in particular a low pass filtering, performed before the sampling.

8. A sensor arrangement (10) in accordance with any one of the preceding claims,
   **characterized in that**
   said size ratio corresponds to the difference of the first and the second control variable.

9. A sensor arrangement (10) in accordance with any one of the preceding claims,

   **characterized in that**
   the respective duration of the first and/or of the second control time window (K1, K2) and/or of the detection time window (E) can be changed, in particular by means of a respective input device,
   and/or
   **in that** the first and/or the second control time window (K1, K2) directly adjoins/adjoin the detection time window (E) in time or partly overlaps/overlap with it.

10. A sensor arrangement (10) in accordance with any one of the preceding claims,
    **characterized in that**,
    after a multiple shortening of the time intervals, in particular after a falling below of a predefined minimum time interval and/or after a reaching of a predefined number of consecutive shortenings, a lengthening of the time intervals takes place and/or after a multiple lengthening of the time intervals, in particular after an exceeding of a predefined minimum time interval and/or after a reaching of a predefined number of consecutive lengthenings, a shortening of the time intervals takes place, wherein preferably the measure for the lengthening and/or the shortening corresponds to at least twice the duration of the detection time window (E).

11. A sensor arrangement (10) in accordance with any one of the preceding claims,
**characterized in that**
the light receiver is inactive outside the period of time which corresponds to the detection time window and to the control time windows.

12. A sensor system comprising at least two sensor arrangements (10) in accordance with at least one of the preceding claims.

**Revendications**

1. Ensemble capteur optoélectronique (10) pour détecter des objets présents dans une zone à surveiller, comprenant un émetteur de lumière (12) pour émettre des signaux lumineux, un récepteur de lumière (14) pour détecter des signaux lumineux de réception et pour convertir les signaux lumineux de réception en signaux de réception électriques, et une unité de commande (16) reliée à l'émetteur de lumière (12) et au récepteur de lumière (14) pour générer un signal de détection d'objet si un objet présent dans la zone à surveiller a été détecté, l'unité de commande (16) étant conçue pour piloter l'émetteur de lumière (12) de manière cyclique à des intervalles de temps prédéterminés pendant une durée d'émission prédéterminée pour émettre un signal lumineux respectif, un signal lumineux respectif émis pendant la durée d'émission étant une succession d'impulsions lumineuses, pour activer le récepteur de lumière (14) au moins pendant la durée d'une fenêtre temporelle de détection (E) qui inclut la durée d'émission, le signal de détection d'objet étant généré sur la base des signaux lumineux de réception détectés pendant la fenêtre temporelle de détection (E),

dans lequel
l'unité de commande (16) est en outre conçue pour activer le récepteur de lumière (14) en supplément pendant la durée d'une première fenêtre temporelle de contrôle (K1), qui commence temporellement avant la fenêtre temporelle de détection (E) et qui est destinée à détecter une première évolution de signal de contrôle, et pendant la durée d'une deuxième fenêtre temporelle de contrôle (K2), qui se termine temporellement après la fenêtre temporelle de détection (E) et ne chevauche pas la première fenêtre temporelle de contrôle (K1) et est destinée à détecter une deuxième évolution de signal de contrôle,

pour déterminer une mesure de signal parasite sur la base d'un rapport proportionnel entre une première grandeur de contrôle dérivée de la première évolution de signal de contrôle et une deuxième grandeur de contrôle dérivée de la deuxième évolution de signal de contrôle, et

pour adapter lesdits intervalles de temps au moins sur la base de la mesure de signal parasite,

la détection de la première et/ou de la deuxième évolution de signal de contrôle inclut la réception et l'échantillonnage des signaux de réception détectés à l'intérieur de la fenêtre temporelle de contrôle (K1, K2) respectivement associée, pour générer des valeurs d'échantillonnage discrètes,

la détermination de la première et/ou de la deuxième grandeur de contrôle s'effectue sur la base d'un taux de variation déterminé des valeurs d'échantillonnage respectivement associées, et

la détermination du taux de variation des valeurs d'échantillonnage respectivement associées de la première et/ou de la deuxième évolution de signal de contrôle inclut le fait que, pour chaque paire possible de valeurs d'échantillonnage voisines de l'évolution de signal de contrôle respective, la valeur absolue de la différence de ces valeurs d'échantillonnage est déterminée respectivement, et les valeurs absolues déterminées sont additionnées.

2. Ensemble capteur (10) selon la revendication 1,
**caractérisé en ce que**
la durée respective de la première et/ou de la deuxième fenêtre temporelle de contrôle (K1, K2) est inférieure à 40 %, de préférence pas supérieure à 20 %, de manière particulièrement préférée pas supérieure à 15 % de la durée moyenne ou initiale des intervalles de temps prédéterminés.

3. Ensemble capteur (10) selon la revendication 1 ou 2,
**caractérisé en ce que**
la durée pendant laquelle le récepteur de lumière (14) est activé est inférieure à 50 %, de préférence inférieure à 40 % de la durée moyenne ou initiale des intervalles de temps prédéterminés.

4. Ensemble capteur (10) selon l'une des revendications précédentes, **caractérisé en ce que**
l'unité de commande (16) est en outre conçue pour modifier lesdits intervalles de temps de telle sorte que, pour un cycle ou un petit nombre de cycles, l'intervalle de temps prédéterminé est raccourci ou allongé d'une mesure prédéterminée et, pour les cycles suivants, est ramené à la valeur initiale.

5. Ensemble capteur (10) selon la revendication 4, **caractérisé en ce que** la mesure prédéterminée est comprise entre 50 % et 80 % de la durée moyenne ou initiale des intervalles de temps prédéterminés, et est de préférence exactement de 50 %.

6. Ensemble capteur (10) selon l'une des revendications précédentes, **caractérisé en ce que** les grandeurs de contrôle sont déterminées de telle sorte que la mesure de signal parasite est une mesure de l'écart temporel entre un signal parasite, reçu temporellement avant ou après la fenêtre temporelle de détection (E), et la fenêtre temporelle de détection (E).

7. Ensemble capteur (10) selon l'une des revendications précédentes, **caractérisé en ce que** la détection de la première et/ou de la deuxième évolution de signal de contrôle comprend en outre un filtrage, en particulier un filtrage passe-bas, effectué avant l'échantillonnage.

8. Ensemble capteur (10) selon l'une des revendications précédentes, **caractérisé en ce que** ledit rapport proportionnel correspond à la différence entre la première et la deuxième grandeur de contrôle.

9. Ensemble capteur (10) selon l'une des revendications précédentes,

    **caractérisé en ce que** la durée respective de la première et/ou de la deuxième fenêtre temporelle de contrôle (K1, K2) et/ou de la fenêtre temporelle de détection (E) est modifiable, en particulier au moyen d'un dispositif d'entrée respectif, et/ou **en ce que** la première et/ou la deuxième fenêtre temporelle de contrôle (K1, K2) est directement adjacente dans le temps à la fenêtre temporelle de détection (E) ou se chevauche partiellement avec celle-ci.

10. Ensemble capteur (10) selon l'une des revendications précédentes, **caractérisé en ce que** après un raccourcissement répété des intervalles de temps, en particulier après qu'un intervalle de temps minimal donné n'a pas été atteint et/ou après qu'un nombre donné de raccourcissements successifs a été atteint, un allongement des intervalles de temps est effectué, et/ou après un allongement répété des intervalles de temps, en particulier après qu'un intervalle de temps minimal donné a été dépassé et/ou après qu'un nombre donné d'allongements successifs a été atteint, un raccourcissement des intervalles de temps est effectué, de préférence la mesure pour l'allongement et/ou le raccourcissement correspondant à au moins deux fois la durée de la fenêtre temporelle de détection (E).

11. Ensemble capteur (10) selon l'une des revendications précédentes, **caractérisé en ce que** le récepteur de lumière est inactif en dehors de la période qui correspond à la fenêtre temporelle de détection et aux fenêtres temporelles de contrôle.

12. Système capteur comprenant au moins deux ensembles capteurs (10) selon l'une au moins des revendications précédentes.

Fig. 1

Fig. 2

Fig. 3A    Fig. 3B

Fig.4A

Fig.4B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4141469 A1
- DE 102005045578 A1
- DE 10136242 A1
- DE 102005018263 A1